# EUROPÄISCHE PATENTSCHRIFT

(11) **EP 2 307 428 B1**
(45) Veröffentlichungstag und Bekanntmachung des Hinweises auf die Patenterteilung: **10.07.2013**
(21) Anmeldenummer: 09757354.7
(22) Anmeldetag: 17.04.2009
(51) Int. Cl.: C07F 7/18, C07F 7/20

(54) **VERFAHREN ZUR HERSTELLUNG VON ALKYLAMINOALKYLALKOXYSILANEN**
PROCESS FOR PREPARING ALKYLAMINOALKYLALKOXYSILANES
PROCÉDÉ DE PRÉPARATION D'ALKYLAMINOALKYLALCOXYSILANES

(30) Priorität: 03.06.2008 DE 102008002182
(43) Veröffentlichungstag der Anmeldung: 13.04.2011
(73) Patentinhaber: Evonik Degussa GmbH, 45128 Essen (DE)
(72) Erfinder: JUST, Eckhard, 79618 Rheinfelden (DE); ALBERT, Philipp, 79539 Lörrach (DE); JENKNER, Peter, 46485 Wesel (DE)
(86) Internationale Anmeldenummer: PCT/EP2009/054587
(87) Internationale Veröffentlichungsnummer: WO 2009/146971

(56) Entgegenhaltungen:
- EP-A- 0 702 017
- DE-A1- 10 140 563

## Beschreibung

Die vorliegende Erfindung betrifft ein Verfahren zur Herstellung von Alkylaminoalkylalkoxysilanen durch Umsetzung eines Alkylamins mit einem Halogenalkylalkoxysilan, anschließender Aufarbeitung des erhaltenen Produktgemischs und Rückführung des Alkylamins in den Prozess.

Es ist bekannt, Alkylaminoalkylalkoxysilane, wie Dynasylan^{®} 1189, einem 3-(n-Butylamino)propyltriethoxysilan, durch Umsetzung eines entsprechenden Alkylamins mit einem Halogenalkylalkoxysilan herzustellen (DE 101 40 563). Bei der Umsetzung entsteht Halogenwasserstoff, beispielsweise Chlorwasserstoff (HCl), der sowohl mit dem in der Regel im Überschuss eingesetzten Alkylamin als auch mit dem bei der Umsetzung entstandenen Produkt, dem Alkylaminoalkylalkoxysilan, zu den entsprechenden Aminhydrohalogeniden reagiert. Die Aminhydrohalogenide sind teilweise im Produkt gelöst und werden zur Ausfällung in einen Kristallisator überführt. Der Kristallisator wird gekühlt und gegebenenfalls auf einer niedrigeren Druckstufe als die der vorhergehenden Reaktionsstufe betrieben. Das im Kristallisator ausgefallene Aminhydrohalogenid wird vom Rohprodukt durch Filtration abgetrennt und das reine Produkt durch Destillation gewonnen. Dabei ist von Nachteil, dass beim Entfernen der Aminhydrochloride sowohl eingesetztes Alkylamin in Form von Alkylaminhydrohalogenid als auch Produkt in Form von Alkylaminoalkylalkoxysilanhydrohalogenid abgetrennt wird. Dies führt zu Produktverlust gegenüber der theoretisch zu erwartenden Ausbeute. Ferner geht Edukt in Form des entsprechenden Aminoalkylhydrohalogenids verloren, was zusätzlich zu Lasten der Wirtschaftlichkeit des Verfahrens geht. Darüber hinaus müssen die abgetrennten Aminhydrohalogenide entsorgt bzw. in meist aufwendigen Verfahren zurück gewonnen werden.

Der vorliegenden Erfindung lag die Aufgabe zugrunde, eine Möglichkeit zu finden, um oben genannte Nachteile zu mildern. Insbesondere ein Verfahren bereitzustellen, bei dem möglichst wenig zu entsorgender Rückstand entsteht und das eine hohe Ausbeute ermöglicht.

Die Aufgabe wurde erfindungsgemäß entsprechend den Angaben in den Patentansprüchen gelöst.

So kann man die Umsetzung eines Alkylamins, beispielsweise n-Butylamin, mit einem Halogenalkylalkoxysilan, beispielsweise 3-Chlorpropyltrimethoxysilan, vorteilhaft in einer einfachen Rührapparatur, wie in einem Schaufeltrockner oder Rührkessel, ohne einen zusätzlichen Kristallisator vorteilhaft durchführen und dabei hohe Ausbeuten erzielen. Weiter kann man nach Beendigung der Umsetzung des im Überschuss eingesetzten Alkylamins mit dem Halogenalkylalkoxysilan freies Alkylamin abdestillieren. Das resultierende Produktgemisch enthält Alkylaminhydrohalogenid und Alkylaminoalkylalkoxysilanhydrochlorid und kann in vorteilhafter Weise unter Zusatz eines den vorliegenden Verbindungen entsprechenden Alkylaminoalkylalkoxysilans weiter destilliert werden, wobei insbesondere durch den Zusatz entsprechender Mengen an Alkylaminoalkylalkoxysilan aus dem im Produktgemisch vorliegenden Alkylaminhydrochlorid auch das restliche Alkylamin freigesetzt und durch Destillation abgeführt werden kann.

So kann in vergleichsweise einfacher Weise das im Überschuss eingesetzte Alkylamin zu mehr als 90 % zurück gewonnen und wieder in den Prozess recycliert werden, was zur besonderen Wirtschaftlichkeit des vorliegenden Verfahrens vorteilhaft beiträgt. Im Sumpf der Destillationsstufe verbleibt ein dem Produkt entsprechendes Alkylaminoalkylalkoxysilanhydrohalogenid.

Zur vorteilhaften Aufarbeitung des so erhaltenen Produkt- bzw. Produkthydrohalogenidgemischs wird
- das Produkt- bzw. Produkthydrohalogenidgemisch temperiert, mit einer Alkalialkoholatlösung umgesetzt, Alkalihalogenid ausgefällt und abgetrennt, das Lösemittel der eingesetzten Alkalialkoholatlösung durch Destillation aus dem Produkt entfernt und das Produkt gewonnen,
   oder
- dem Produkt- bzw. Produkthydrohalogenidgemisch ein unpolares organische Lösemittel zusetzt, das Gemisch mit einer wässrigen Alkali- oder Erdalkalilauge behandelt, die dabei entstehende wässrige, Metallsalz enthaltende Phase von der organischen Produktphase getrennt, die organische Phase destilliert und das Produkt gewonnen.

Gegenstand der vorliegenden Erfindung ist somit ein Verfahren zur Herstellung eines Alkylaminoalkylalkoxysilans der allgemeinen Formel I

R-(NR')-Y-Si(R¹)ₙ(OR²)₃₋ₙ (I),

worin R eine lineare, verzweigte oder cyclische Alkylgruppe mit 1 bis 12 C-Atomen darstellt, R' für ein Wasserstoff (H) oder für eine lineare, verzweigte oder cyclische Alkylgruppe mit 1 bis 12 C-Atomen steht, Y eine bivalente Alkylgruppe aus der Reihe -CH₂-, -(CH₂)₂-, -(CH₂)₃-, -(CH₂)(CH(CH₃))(CH₂)- und -(CH₂)₄- ist, Gruppen R¹ und R² gleich oder verschieden sind und jeweils für eine lineare oder verzweigte Alkylgruppe mit 1 bis 4 C-Atomen stehen und n gleich 0 oder 1 oder 2 ist,
indem man
- ein im Überschuss eingesetztes Alkylamin der allgemeinen Formel II

   R(NR')H (II),

   worin R eine lineare, verzweigte oder cyclische Alkylgruppe mit 1 bis 12 C-Atomen darstellt und R' für ein Wasserstoff (H) oder für eine lineare, verzweigte oder cyclische Alkylgruppe mit 1 bis 12 C-Atomen steht,
mit einem Halogenalkylalkoxysilan der allgemeinen Formel III

X-Y-Si(R¹)ₙ(OR²)₃₋ₙ (III),

worin X für Cl oder Br steht, Y eine bivalente Alkylgruppe aus der Reihe -CH₂-, -(CH₂)₂-, -(CH₂)₃-, -(CH₂)(CH(CH₃))(CH₂)- und -(CH₂)₄- ist, Gruppen R¹ und R² gleich oder verschieden sind und jeweils für eine lineare oder verzweigte Alkylgruppe mit 1 bis 4 C-Atomen stehen und n gleich 0 oder 1 oder 2 ist,
umsetzt, wobei man das Alkylamin und das Halogenalkylalkoxysilan in einem molaren Verhältnis von 1,1 zu 1 bis 10 zu 1 einsetzt,
- überschüssiges freies Alkylamin abdestilliert,
- gleichzeitig, d. h. während der zuvor genannten Destillation, das verbleibende Alkylaminhydrohalogenid und Alkylaminoalkylalkoxysilanhydrohalogenid enthaltende Produktgemisch unter Zusatz eines den vorliegenden Verbindungen entsprechendem Alkylaminoalkylalkoxysilan behandelt, das dadurch freigesetzte Alkylamin aus dem System abgeführt und
- das verbleibende Produkt- bzw. Produkthydrohalogenidgemisch aufarbeitet, wobei
   man zur Aufarbeitung das Produkt- bzw. Produkthydrohalogenidgemisch temperiert, mit einer Alkalialkoholatlösung umsetzt, dabei entstandenes Alkalihalogenid ausfällt und abtrennt, das Lösemittel der eingesetzten Alkalialkoholatlösung durch Destillation aus dem Produkt entfernt und das Produkt gewinnt
   oder
   man zur Aufarbeitung dem Produkt- bzw. Produkthydrohalogenidgemisch ein unpolares organisches Lösemittel zusetzt, das Gemisch mit einer wässrigen Alkali - oder Erdalkalilauge behandelt, die dabei entstehende wässrige, Metallsalz enthaltende Phase von der organischen Produktphase trennt, die organische Phase destilliert und das Produkt gewinnt.

Bevorzugt führt man die Umsetzung in einer beheiz- und kühlbaren, druck- bzw. unterdruckfesten Rührapparatur durch, die gleichzeitig eine Destillationsmöglichkeit bietet. Vorteilhaft kann die Apparatur mit einer zusätzlichen Möglichkeit zur Phasentrennen ausgestattet sein.

Dabei setzt man beim erfindungsgemäßen Verfahren das Alkylamin zum Halogenalkylalkoxysilan vorteilhaft in einem molaren Verhältnis von 1,1 zu 1 bis 10 zu 1, vorzugsweise von 1,5 zu 1 bis 10 zu 1, besonders bevorzugt von 1,8 zu 1 bis 6 zu 1, ganz besonders bevorzugt von 2 zu 1 bis 5 zu 1, insbesondere von 4 zu1 ein.

So setzt man beim erfindungsgemäßen Verfahren als Alkylamin gemäß der Formel II vorzugsweise Methylamin, Ethylamin, n-Propylamin, n-Butylamin, 2-Heptylamin, 2-Butylamin, 2-Pentylamin, n-Pentylamin, n-Hexylamin, n-Heptylamin, 3-Pentylamin, 2-Octylamin, Octylamin, Nonylamin, Decylamin, Undecylamin oder Doedecylamin ein.

Weiter bevorzugt man beim erfindungsgemäßen Verfahren als Halogenalkylalkoxysilan gemäß der Formel III 3-Chlorpropyltrimethoxysilan, 3-Chlorpropyltriethoxysilan, 3-Chlorisobutyltrimethoxysilan, 3-Chlorisobutyltriethoxysilan, 2-Chlorethyltrimethoxysilan, 2-Chlorethyltriethoxysilan, 1-Chlormethyltrimethoxysilan, 1-Chlormetyltriethoxysilan, Chlorpropylmethyldimethoxysilan, Chlorpropylmethyldiethoxysilan, Chlorpropyldimethylmethoxysilan, Chlorpropyldimethylethoxysilan, Chlorisobutylmethyldimethoxysilan, Chlorisobutyldimethylmethoxysilan, Chlorisobutyldimethylethoxysilan, Chlorisobutyldimethyldiethoxysilan, Chlorethylmethyldimethoxysilan, Chlorethylmethyldiethoxysilan, Chlorethyldimethylmethoxysilan, Chlorethyldimethylethoxysilan, Chlormethylmethyldimethoxysilan, Chlormethylmethyldiethoxysilan, Chlormethyldimethylmethoxysilan oder Chlormethyldimethylethoxysilan.

Zur Durchführung des erfindungsgemäßen Verfahrens gibt man das Alkylamin und das Halogenalkylalkoxysilan unter guter Durchmischung in die dafür vorgesehene Reaktionsapparatur, wobei die Temperatur der Reaktionsmischung in der Regel ansteigt. Zur Führung der Umsetzung kann man die Apparatur je nach Bedarf kühlen oder beheizen sowie den Innendruck variieren. Das Durchmischen der Reaktionsmischung kann durch geeignete Rühr-, Misch- oder Kneteinrichtungen erfolgen. So führt man die Umsetzung geeigneterweise bei einer Temperatur von 60 bis 200 °C, vorzugsweise von 60 bis 180 °C, besonders bevorzugt von 60 bis 130 °C, und dem Druck von 0,1 bis 20 bar, vorzugsweise von 0,1 bis 5 bar, durch. Die Umsetzung ist in der Regel nach 30 Minuten bis 16 Stunden, vorzugsweise nach 1 bis 15 Stunden, besonders bevorzugt zwischen 2 und 14 Stunden, abgeschlossen

Danach führt man überschüssiges Alkylamin aus dem System ab, geeigneterweise durch eine Destillation, wobei man erfindungsgemäß ein dem Produkt entsprechendes Alkylaminoalkylalkoxysilan in einer wohl definierten Menge zusetzt, sodass aus der im Produktgemisch noch vorliegenden Menge an Alkylaminhydrohalogenid das Alkylamin durch Verschiebung des Gleichgewichts freigesetzt wird und das zugeführte Alkylaminoalkylalkoxysilan entsprechend in Alkylaminoalkylalkoxysilanhydrohalogenid übergeht.

Zur Aufarbeitung kann man das so erhaltene Produkt- bzw. Produkthydrohalogenidgemisch wohl temperiert, d. h. in einem weichen rührbaren bzw. pastösen mischbaren Zustand mit einer Alkalialkoholatlösung umsetzen, wobei Alkalihalogenid ausfällt und beispielsweise in einfacher und wirtschaftlicher Weise durch Filtration vom Produkt abgetrennt wird. Anschließend kann das Lösemittel der eingesetzten Alkalialkoholatlösung beispielsweise durch Destillation aus dem Produkt entfernt und das Produkt einer Reindestillation zugeführt werden. Dabei können die jeweiligen Destillationsschritte in einem Dünnschicht- bzw. Kurzwegverdampfer und/oder in einer Destillationskolonne durchgeführt werden. Ein Teil des Produktstroms kann im Prozess erneut für die vorangehend beschriebene Freisetzung von Alkylamin aus Alkylaminhydrochlorid vorteilhaft genutzt werden.

Beim erfindungsgemäßen Verfahren kann man die Aufarbeitung aber auch in der Art durchführen, dass man
- das vorliegenden Produkt- bzw. Produkthydrohalogenidgemisch mit einem im Wesentlichen unpolares organisches Lösemittel, vorzugsweise ausgewählt aus der Reihe Hexan, Heptan, Octan, Cyclohexan, insbesondere Toluol, mischt,
- das erhaltene Gemisch mit einer wässrige Lauge behandelt sowie reagieren lässt, vorzugsweise unter definierter Zeitvorgabe, vgl. auch nachstehende Reaktionsgleichung,
- anschließend die wässrige Phase von der organischen Phase trennt,
- aus der organischen Phase das organische Lösemittel entfernt und
- die verbleibende organische Phase gewinnt.
[CH₃(CH₂)₃(NH₂)(CH₂)₃Si(OMe)₃]⁺Cl⁻+ NaOH (aq) -> [CH₃(CH₂)₃(NH)(CH₂)₃Si(OMe)₃]+ [Na⁺ + Cl⁻ + H₂O]

Als wässrige Lauge kann dabei vorzugsweise eine starke Lauge mit einem pH-Wert von mindestens 12, besonders bevorzugt 13 bis 14, eingesetzt werden. Der pH-Wert kann in einer für den Fachmann an sich bekannten Art und Weise bestimmt werden, z. B. mittels pH-Papier. Als Lauge verwendet man bevorzugt eine NaOH- oder KOH-Lauge. Dabei kann die Konzentration der wässrigen Lauge so gewählt werden, dass die wässrige Phase nach der Aufarbeitung einen pH-Wert von 12 erreicht. pH-Werte über 12 sind zu bevorzugen. Geeigneterweise lässt man die so erhaltene Mischung unter Rühren bis zu 30 Minuten, vorzugsweise 10 Sekunden bis 10 Minuten, besonders bevorzugt 15 Sekunden bis 5 Minuten, ganz besonders bevorzugt 20 Sekunden bis 3 Minuten, insbesondere 30 Sekunden bis 1 Minute, reagieren. Bevorzugt führt man die wässrige Aufarbeitung bei einer Temperatur im Bereich von 5 bis 100 °C, besonders bevorzugt von 10 bis 60 °C und ganz besonders bevorzugt zwischen 20 und 40 °C durch. Dabei kann man vorteilhaft in einem beheiz-/kühlbaren Rührkessel mit konisch zulaufendem Boden einschließlich Bodenablass und Sichtfenster arbeiten. Kessel und Rührwerk sind vorzugsweise aus einem nicht rostenden Material, beispielsweise Edelstahl oder emailliertem Stahl. In der Regel bilden sich schon nach kurzer Ruhezeit zwei Phasen aus, die scharf von einander getrennt vorliegen. Nach der Ausbildung der zwei Phasen kann man die wässrige Phase von der organischen Phase über das Bodenventil des Kessels ablassen und so von der organischen Phase trennen. Die wässrige Phase enthält in der Regel das bei der Umsetzung gebildete Salz in gelöster Form, bei Einsatz von Natronlauge enthält die wässrige Phase somit beispielsweise gelöstes NaCl. Die organische Phase kann nun in eine Trenneinheit, beispielsweise in eine Destillation, überführt oder über einen Dünnschichtverdampfer bzw. über einen Kurzwegverdampfer gefahren werden. Dort kann vorliegendes organisches Lösemittel entfernt werden, geeigneterweise durch Abtrennen unter vermindertem Druck. Im Sumpf verbleibt die organische Phase, die man zur Produktgewinnung geeigneterweise filtriert und/oder destilliert.

In einer bevorzugten Ausführungsform des erfindungsgemäßen Verfahrens setzt man n-Butylamin mit 3-Chlorpropyltrimethoxysilan (CPTMO) in einem Molverhältnis von 3 zu 1 in einen Rührkessel, beispielsweise einen Rührautoklaven, ein, lässt bei einer Temperatur von 60 bis 180 °C bei einem Druck von 0,1 bis 10 bar unter guter Durchmischung reagieren (auch kurz Umsetzung genannt) und destilliert anschließend überschüssiges n-Butylamin vorzugsweise bei 105 bis 115 °C aus dem Reaktor, beispielsweise gemäß:

2 Cl(CH₂)₃Si(OMe)₃ + 6 H₂N(CH₂)₃CH₃ -> CH₃(CH₂)₃(NH)(CH₂)₃Si(OMe)₃ + 3 H₂N(CH₂)₃CH₃ + [CH₃(CH₂)₃(NH₂)(CH₂)₃Si(OMe)₃]Cl⁻ +[H₃N(CH₂)₃CH₃]⁺Cl⁻

Während dem Abdestillieren des freien n-Butylamins kann Butylaminhydrochlorid mit vorliegendem sowie entsprechend den vorliegenden Mengenverhältnissen optional zugesetzem n-Butylaminopropyltrimethoxysilan (Dynasylan^{®} 1189) zu n-Butylamin und 3-(Trimethoxysilyl)-N-(n-butyl)propylaminhydrochlorid reagieren. So liegen zu Beginn der Destillation sowohl das n-Butylamin als auch das 3-(n-Butylamino)propyltrimethoxysilan nur teilweise protoniert, d.h. als Hydrohalogenide vor. Durch die Destillation wird n-Butylamin aus dem System entfernt, wodurch das Gleichgewicht zu 3-(Trimethoxysilyl)-N-(n-butyl)propylaminhydrochlorid verschoben wird:

CH₃(CH₂)₃(NH)(CH₂)₃Si(OMe)₃ + [CH₃(CH₂)₃(NH₂)(CH₂)₃Si(OMe)₃]⁺Cl⁻ + [H₃N(CH₂)₃CH₃]⁺Cl⁻-> 2 [CH₃(CH₂)₃(NH₂)(CH₂)₃Si(OMe)₃]⁺Cl⁻ + H₂N(CH₂)₃CH₃ ↑

Bei einer Umsetzung von n-Butylamin mit CPTMO mit einem Verhältnis 3 : 1 wird 1 mol n-Butylamin verbraucht. 2 mole n-Butylamin können ohne jeden Zusatz wieder durch Destillation entfernt werden. Denn bei der Umsetzung entsteht 1 mol HCl, und durch die Destillation liegt am Ende der Reaktion 1 mol n-Butylaminopropylsilan-Hydrochlorid vor.

Bei einer Umsetzung von n-Butylamin mit CPTMO fällt aber auch entsprechendes "Bis-Silylamin" [N-Butyl-N,N-bis(trimethoxysilylpropyl)amin] als Nebenprodukt an.

So wird bei der Umsetzung weniger n-Butylamin verbraucht, und damit steht bei der Destillation weniger n-Butylaminopropylsilan zur Verfügung, das HCl aufnehmen kann. Somit ist es vorteilhaft, z. B. am Ende der Destillation n-Butylaminopropyltrimethoxysilan zuzugeben. Dadurch kann das n-Butylamin praktisch vollständig gewonnen werden.

Ferner kann eine Rückgewinnung von Methanol (MeOH) nach der Salzabtrennung über ein Azeotrop aus MeOH und n-Butylamin erfolgen.

Beim erfindungsgemäßen Verfahren können vorteilhaft rund 93 bis 99 % des überschüssigen n-Butylamins, beispielsweise in einer Reinheit von 98 %, zurück gewonnen und wieder bei der nächsten Umsetzung eingesetzt werden.

3-(Trimethoxysilyl)-N-(n-butyl)propylaminhydrochlorid ist bei etwa 75 °C weich und pastös. Das Produkt kann in einfacher und wirtschaftlicher Weise aus dem nach Destillation erhaltenen Produkthydrohalogenid [3-(Trimethoxysilyl)-N-(n-butyl)propylaminhydrochlorid] bei einer Temperatur von etwa 70 °C mittels einer Natriummethanolatlösung, vorzugsweise 30 Gew.-% Natriummethanolat in Methanol, freigesetzt werden:

[CH₃(CH₂)₃(NH₂)(CH₂)₃Si(OMe)₃]⁺Cl⁻+ NaOMe -> CH₃(CH₂)₃(NH)(CH₂)₃Si(OMe)₃ + NaCl↓ + MeOH

Das dabei bzw. nach Abkühlen der Zusammensetzung ausgefallene NaCl kann zum Beispiel über eine Supra 500 Filterplatte abfiltriert werden. Der Filterkuchen ist in der Regel rieselfähig und besitzt nur eine geringe Restfeuchte. Das Methanol kann aus dem Produkt bei 34 bis 93 °C und einem Druck von 200 mbar entfernt werden. Weiter kann man das Produkt, 3-(n-Butylamin)propyltrimethoxysilan, bei einer Sumpftemperatur von 93 bis 146 °C und einem Druck < 1 mbar durch eine Destillation nachreinigen. So kann die Destillation unter Einsatz einer Destillationskolonne, eines Kolonnensystems, eines Dünnschichtverdampfers bzw. Kurzwegverdampfers oder einer Kombination aus den zuvor genannten Möglichkeiten erfolgen.

Besonders vorteilhaft kann man nach dem erfindungsgemäßen Verfahren 3-(n-Butylamino)propyltrimethoxysilan oder 3-(n-Butylamino)propyltriethoxysilan als Produkt gewinnen.

Die vorliegende Erfindung wird durch die nachfolgenden Beispiele näher erläutert, ohne den Gegenstand zu beschränken.

### Beispiele:

### Beispiel 1

### Umsetzung in einem 5-I-Rührautoklav mit Destillationsvorrichtung:

In einem mit Stickstoff überlagerten Rührautoklav wurden 1878,8 g (25,7 mol) n-Butylamin vorgelegt. Bei einer Sumpftemperatur von 79 °C (Ölbadtemperatur 90 °C) und einem Druck von 0,5 bar wurden innerhalb von 1,5 Stunden 1719,6 g (8,6 mol) Dynasylan^{®} CPTMO (3-Chlorpropyltrimethoxysilan) mit einer Dosierpumpe zudosiert. Dabei stieg die Temperatur von 79 °C auf 89 °C an, der Druck sank auf 0,4 bar ab. Zur Nachreaktion wurde anschließend bei 100 - 102 °C und einem Druck von 0,5 bar 13 Stunden gerührt, wobei der Druck nach 2 Stunden von 0,5bar auf 0,2 bar absank.

### GC-Zusammensetzung nach der Reaktion:

| | |
|---|---|
| CH₃OH: | 0,8 GC-WLD-FL % |
| CH₃(CH₂)₃NH₂: | 29,1 GC-WLD-FL % |
| 3-(n-Butylamino)propyltrimethoxysilan: | 62,6 GC-WLD-FL % |
| Hochsieder: | 5,8 GC-WLD-FL % |

### Abtrennen von n-Butylamin:

Die Destillation wurde bei 74 °C und 400 mbar gestartet und der Druck langsam auf 200 mbar abgesenkt.

Es wurden insgesamt 1211,8 g Butylamin (16,2 mol) mit einer Reinheit von 97,7 % erhalten.
Ausbeute n-Butylamin: 95 %

### Freisetzung des Aminoalkylalkoxysilans mit Natriummethanolatlösung:

Nach der Destillation des n-Butylamins wurde die Sumpftemperatur auf 75 °C reduziert und 1608,5 g einer 30%igen Natriummethanolatlösung zugesetzt. Anschließend wurde 1 Stunden bei etwa 70 °C gerührt.
Nach dem Abkühlen auf 25 °C wurde der Ansatz abgelassen und in einer 10-I-Drucknutsche bei einem Druck von 0,6 bar über eine Supra500 Filterplatte filtriert. Der Filterkuchen wurde mit 600 g (3 x 200 g) Methanol gewaschen.
Auswaage NaCl: 534,4 g
Auswaage Filtrat: 3795,7 g (Filtrat enthielt noch zusätzlich 600 g Waschmethanol)

### Destillation

Bei einer Sumpftemperatur von 34 °C bis 93 °C und einem Druck von 200 mbar wurde innerhalb von ca. 2 Stunden der Vorlauf abgenommen. Nach der Abnahme des Vorlaufs wurde der Druck langsam auf < 1 mbar reduziert und die Sumpftemperatur auf 108 °C (Sieden) erhöht. Bei einer Sumpftemperatur von 93 - 146 °C und einem Druck von < 1 mbar wurde das Produkt abgenommen.

| | |
|---|---|
| Vorlauf: | 1643,9 g inklusive Waschmethanol (91 % Methanol, 9 % n-Butylamin) |
| Hauptlauf: | 1643,9 g [Reinheit: 97,7 % n-Butylaminopropyltrimethoxysilan] |
| Rückstand: | 230 g |

### Beispiel 2

In einen mit Stickstoff überlagerten 1-I-Büchi-Rührautoklav wurden 219,3 g (= 3 mol) n-Butylamin (BTA) vorgelegt. Bei einer Sumpftemperatur von 129 °C (Ölbadtemperatur = 166 °C) und einem Überdruck von 3,2 bar wurden innerhalb von 1 Stunde 199,0 g (= 1,0 mol) 3-Chlorpropyltrimethoxysilan mit einer Dosierpumpe dosiert. Dabei stieg die Temperatur von 129 °C auf 157 °C und der Überdruck zunächst auf 4,2 bar an. Nach Beendigung der Dosierung sank der Überdruck auf 3,0 bar ab. Zur Nachreaktion wurde bei 150 bis 157°C und einem Überdruck von 2,9 bar 4 Stunden gerührt, wobei der Druck nach 1 Stunde von 2,9 bar auf 2,1 bar absank. Anschließend wurde das n-Butylamin aus dem Reaktor über eine Destillationsvorrichtung innerhalb von 15 Minuten in einem Vorlagekolben kondensiert. Dabei fiel der Absolutdruck auf 1,0 bar ab. Nach Erreichen von 1,0 bar Absolutdruck wurde bei einer Sumpftemperatur von 143 °C der Druck langsam auf 63 mbar abgesenkt und das n-Butylamin aus dem Vorlagekolben entfernt. Der Absolutdruck wurde auf < 1 mbar reduziert und das restliche n-Butylamin in einer gekühlten Vorlage auskondensiert. Es wurden insgesamt 143 g n-Butylamin erhalten.

| | | GC-WLG-FL % | | | | |
|---|---|---|---|---|---|---|
| Produkt | Masse [g] | Methanol | n-Butylamin | 3-Clorpropyltrimethoxysilan | n-Butyl-aminopropyl-trimethoxy-silan | Rest |
| Butylamin-Fraktion | 143 | 1,1 | 97,8 | 0,2 | 0,2 | 0,7 |

### Auswertung n-Butylamin (BTA) Rückgewinnung:

| | |
|---|---|
| Auswaage BTA: | 143 g, Reinheit 97,8 % |
| Theroret. Menge BTA: | 149 g |
| BTA Ausbeute: | 94 % |

### Freisetzung des Silanes mit Natriummethanolatlösung und Filtration:

Nach Erreichen einer Sumpftemperatur von 75°C wurde 187 g 30%ige Natriummethanolatlösung zugesetzt und 1 Stunde bei etwa 70 °C gerührt.
Nach dem Abkühlen wurde der Ansatz abgelassen und in einer 2-I-Drucknutsche über eine Supra500-Filterplatte bei einem Druck von 0,6 bar filtriert. Die Filtration dauerte wenige Minuten. Anschließend wurde der Filterkuchen mit 210 g (3 x 70 g) Methanol gewaschen.
Auswaage NaCl = 62 g
Auswaage Filtrat = 441 g (Filtrat enthält noch zusätzlich 210 g Waschmethanol)

### GC-Zusammensetzung Filtrat:

| | |
|---|---|
| Methanol = | 47 % |
| n-Butylamin = | 3 % |
| n-Butylaminopropyltrimethoxysilan = | 44 % |
| N,N-Bis-[triethoxysilylpropyl]butylamin = | 4 % |
| Rückstand = | 2 % |

### Destillation n-Butylaminopropyltrimethoxysilan:

Bei einer Sumpftemperatur von 34 bis 93 °C, einer Kopftemperatur von 30 bis 40 °C und einem Druck von 200 mbar wird der Vorlauf abgenommen. Um den Hauptlauf abzunehmen, wurde der Druck langsam auf < 1 mbar abgesenkt und die Sumpftemperatur auf 108°C (Sieden) erhöht. Bei einer Sumpftemperatur von 93 bis 146 °C, einer Kopftemperatur von 98 bis 108 °C und einem Druck von < 1 mbar wurde der Hauptlauf n-Butylaminopropyltrimethoxysilan abgenommen.

| | |
|---|---|
| Vorlauf (92 % Methanol, 8 % n-Butylamin) = | 324 g |
| Hauptlauf (n-Butylaminopropyltrimethoxysilan)= | 200 g |
| Rückstand = | 27 g |
| Ausbeute n-Butylaminopropyltrimethoxysilan = | 85 % |

### Beispiel 3

In einen mit Stickstoff überlagerten 1-I-Büchi-Rührautoklav wurden 220 g = 3 mol n-Butylamin (BTA) vorgelegt. Bei einer Sumpftemperatur von 130°C (Ölbadtemperatur = 165°C) und einem Überdruck von 3,2 bar wurden innerhalb von 1 Stunde 199,0 g (= 1,0 mol) 3-Chlorpropyltrimethoxysilan mit einer Dosierpumpe dosiert. Dabei stieg die Temperatur von 130 °C auf 157 °C und der Überdruck zunächst auf 4,5 bar an. Nach Beendigung der Dosierung sank der Überdruck auf 3,0 bar ab. Zur Nachreaktion wurde bei 150 °C und einem Überdruck von 3 bar 4 Stunden gerührt, wobei der Druck nach 1 Stunde von 3 bar auf 2,1 bar absank. Anschließend wurde das n-Butylamin aus dem Reaktor über eine Destillationsvorrichtung innerhalb von 15 Minuten in einen Vorlagekolben kondensiert. Dabei fiel der Absolutdruck auf 1,0 bar ab. Nach Erreichen von 1,0 bar Absolutdruck wurde bei einer Sumpftemperatur von 138 °C 20 g (= 0,08 mol) n-Butylaminopropyltrimethoxysilan zugegeben und der Druck langsam auf einen Absolutdruck von 65 mbar abgesenkt. Anschließend wurde das n-Butylamin aus dem Vorlagekolben entfernt. Der Absolutdruck wurde auf < 1 mbar reduziert und das restliche n-Butylamin in einer gekühlten Vorlage auskondensiert. Es wurden insgesamt 148 g Butylamin erhalten.

| | | GC-WLD-FL% | | | | |
|---|---|---|---|---|---|---|
| Produkt | Masse [g] | MEOH | Butylamin | 3-Chlorpropyl-trimethoxysilan | n-Butylamino-propyl-trimethoxysilan | Rest |
| Butylamin-Fraktion | 148 | 0,6 | 98,7 | 0,1 | 0,3 | 0,3 |

### Auswertung n-Butylamin (BTA) Rückgewinnung:

| | |
|---|---|
| Auswaage BTA: | 148 g, Reinheit 98,7 % |
| Theroret. Menge BTA: | 149 g |
| BTA Ausbeute: | 98 % |

### Freisetzung des Silanes mit Natriummethanolatlösung und Filtration:

Nach Erreichen einer Sumpftemperatur von 75 °C wurde 187 g 30%ige Natriummethanolatlösung zugesetzt und 1 Stunde bei etwa 70 °C gerührt.
Nach dem Abkühlen wurde der Ansatz abgelassen und in einer 2-1-Drucknutsche über eine Supra500-Filterplatte bei einem Druck von 0,6 bar filtriert. Die Filtration dauerte wenige Minuten. Anschließend wurde der Filterkuchen mit 210 g (3 x 70 g) Methanol gewaschen.
Auswaage NaCl = 65 g
Auswaage Filtrat = 450 g (Filtrat enthält noch zusätzlich 210 g Waschmethanol)

### GC-Zusammensetzung Filtrat:

| | |
|---|---|
| Methanol = | 48 % |
| n-Butylamin = | 1 % |
| n-Butylaminoropyltriemthoxysilan = | 45 % |
| N,N-Bis-[triethoxysilylpropyl]butylamin = | 4 % |
| Rückstand = | 2 % |

### Destillation n-Butylaminopropyltrimethoxysilan:

Bei einer Sumpftemperatur von 35 bis 95 °C, einer Kopftemperatur von 30 bis 40 °C und einem Druck von 200 mbar wird der Vorlauf abgenommen. Um den Hauptlauf abzunehmen, wurde der Druck langsam auf < 1 mbar abgesenkt und die Sumpftemperatur auf 108 °C (Sieden) erhöht. Bei einer Sumpftemperatur von 93 bis 146 °C, einer Kopftemperatur von 98 bis 108 °C und einem Druck von < 1 mbar wurde der Hauptlauf DS 1189 abgenommen.

| | |
|---|---|
| Vorlauf (92 % Methanol, 8 % n-Butylamin) = | 330 g |
| Hauptlauf (n-Butylaminopropyltrimethoxysilan)= | 225 g |
| Rückstand = | 20 g |
| Ausbeute n-Butylaminopropyltrimethoxysilan = | 87 % |

### Beispiel 4

328,95 g (4,5 mol) n-Butylamin wurden in einem 1-I-Büchi-Glasautoklaven vorgelegt. Bei einer Temperatur von 130 °C und einem Druck von 3,2 bar wurden 298,5 g (1,5 mol) CPTMO mittels einer Pumpe dosiert (5 ml/min). Nach Beendigung der Dosierung wurde die Reaktion 2 h bei 155 °C gehalten, anschließend auf 140 °C abgekühlt. Nach dem Entspannen des Reaktors wurde das n-Butylamin bei 145 °C destillativ entfernt. Der Kristallbrei wurde mit 1295 g Toluol versetzt und warm in einen Scheidetrichter überführt. Dann wurde eine kalte wässrige Lösung (93 g NaOH und 270 g H₂O) zugegeben und 30 s intensiv gemischt. Die anschließende Phasentrennung dauerte 30 s.
Auswaage wässrige Phase: 413 g
Auswaage organ. Phase: 1609 g

Die organische Phase wurde bei 89 bis 95 mbar und 57 bis 65 °C am Rotationsverdampfer vom Toluol befreit. Anschließend wurde das Produkt bei 3 mbar und 126 °C destilliert.
1. Fraktion (Toluol): 1217 g
2. Fraktion (Produkt): 271,9 g, klare farblose Flüssigkeit
Ausbeute: 72 %

## Patentansprüche

1. Verfahren zur Herstellung eines Alkylaminoalkylalkoxysilans der allgemeinen Formel I
R-(NR')-Y-Si(R¹)ₙ(OR ²)₃₋ₙ (I),
worin R eine lineare, verzweigte oder cyclische Alkylgruppe mit 1 bis 12 C-Atomen darstellt, R' für ein Wasserstoff (H) oder für eine lineare, verzweigte oder cyclische Alkylgruppe mit 1 bis 12 C-Atomen steht, Y eine bivalente Alkylgruppe aus der Reihe -CH₂-, -(CH₂)₂-, -(CH₂)₃, -(CH₂)(CH(CH₃))(CH₂)- und -(CH₂)₄- ist, Gruppen R¹ und R² gleich oder verschieden sind und jeweils für eine lineare oder verzweigte Alkylgruppe mit 1 bis 4 C-Atomen stehen und n gleich 0 oder 1 oder 2 ist,
indem man
- ein im Überschuss eingesetztes Alkylamin der allgemeinen Formel II
R(NR')H (II),
worin R eine lineare, verzweigte oder cyclische Alkylgruppe mit 1 bis 12 C-Atomen darstellt und R' für ein Wasserstoff (H) oder für eine lineare, verzweigte oder cyclische Alkylgruppe mit 1 bis 12 C-Atomen steht,
mit einem Halogenalkylalkoxysilan der allgemeinen Formel III
X-Y-Si(R¹)ₙ(OR²)₃₋ₙ (III),
worin X für Cl oder Br steht, Y eine bivalente Alkylgruppe aus der Reihe -CH₂-, -(CH₂)₂-, -(CH₂)₃-, -(CH₂)(CH(CH₃))(CH₂)- und -(CH₂)₄- ist, Gruppen R¹ und R² gleich oder verschieden sind und jeweils für eine lineare oder verzweigte Alkylgruppe mit 1 bis 4 C-Atomen stehen und n gleich 0 oder 1 oder 2 ist, umsetzt, wobei man das Alkylamin und das Halogenalkylalkoxysilan in einem molaren Verhältnis von 1,1 zu 1 bis 10 zu 1 einsetzt,
- überschüssiges freies Alkylamin abdestilliert,
- gleichzeitig das verbleibende Alkylaminhydrohalogenid und Alkylaminoalkylalkoxysilanhydrohalogenid enthaltende Produktgemisch unter Zusatz eines den vorliegenden Verbindungen entsprechenden Alkylaminoalkylalkoxysilans behandelt, das dadurch freigesetzte Alkylamin aus dem System abführt und
- das verbleibende Produkt- bzw. Produkthydrohalogenidgemisch aufarbeitet, wobei
man zur Aufarbeitung das Produkt- bzw. Produkthydrohalogenidgemisch temperiert, mit einer Alkalialkoholatlösung umsetzt, dabei entstandenes Alkalihalogenid ausfällt und abtrennt, das Lösemittel der eingesetzten Alkalialkoholatlösung durch Destillation aus dem Produkt entfernt und das Produkt gewinnt
oder
man zur Aufarbeitung dem Produkt- bzw. Produkthydrohalogenidgemisch ein unpolares organisches Lösemittel zusetzt, das Gemisch mit einer wässrigen Alkali- oder Erdalkalilauge behandelt, die dabei entstehende wässrige, Metallsalz enthaltende Phase von der organischen Produktphase trennt, die organische Phase destilliert und das Produkt gewinnt.

2. Verfahren nach Anspruch 1,
**dadurch gekennzeichnet,**
**dass** man gewonnenes Produkt gemäß Formel I zur Freisetzung des entsprechenden Alkylamins aus dem Alkylaminhydrohalogenid anteilig in den Prozess zurückführt.

3. Verfahren nach Anspruch 1 oder 2,
**dadurch gekennzeichnet,**
**dass** man zurück gewonnenes Alkylamin als Eduktkomponente recycliert.

4. Verfahren nach einem der Ansprüche 1 bis 3,
**dadurch gekennzeichnet,**
**dass** man als Alkylamin gemäß der Formel II Methylamin, Ethylamin, n-Propylamin, n-Butylamin, 2-Heptylamin, 2-Butylamin, n-Pentylamin, 2-Pentylamin, 3-Pentylamin, n-Hexylamin, n-Heptylamin, Octylamin, 2-Octylamin, Nonylamin, Decylamin, Undecylamin oder Dodecylamin einsetzt.

5. Verfahren nach einem der Ansprüche 1 bis 4,
**dadurch gekennzeichnet,**
**dass** man als Halogenalkylalkoxysilan gemäß der Formel III 3-Chlorpropyltrimethoxysilan, 3-Chlorpropyltriethoxysilan, 3-Chlorisobutyltrimethoxysilan, 3-Chlorisobutyltriethoxysilan, 2-Chlorethyltrimethoxysilan, 2-Chlorethyltriethoxysilan, 1-Chlormethyltrimethoxysilan, 1-Chlormetyltriethoxysilan, Chlorpropylmethyldimethoxysilan, Chlorpropylmethyldiethoxysilan, Chlorpropyldimethylmethoxysilan, Chlorpropyldimethylethoxysilan, Chlorisobutylmethyldimethoxysilan, Chlorisobutyldimethylmethoxysilan, Chlorisobutyldimethylethoxysilan, Chlorisobutyldimethyldiethoxysilan, Chlorethylmethyldimethoxysilan, Chlorethylmethyldiethoxysilan, Chlorethyldimethylmethoxysilan, Chlorethyldimethylethoxysilan, Chlormethylmethyldimethoxysilan, Chlormethylmethyldiethoxysilan, Chlormethyldimethylmethoxysilan oder Chlormethyldimethylethoxysilan einsetzt.

6. Verfahren nach einem der Ansprüche 1 bis 5,
**dadurch gekennzeichnet,**
**dass** man die Umsetzung bei einer Temperatur von 60 bis 200 °C, einem Druck von 0,1 bis 20 bar und über eine Dauer von 30 Minuten bis 16 Stunden durchführt.

7. Verfahren nach einem der Ansprüche 1 bis 6,
**dadurch gekennzeichnet,**
**dass** man als Produkt 3-(n-Butylamino)propyltrimethoxysilan oder 3-(n-Butylamino)propyltriethoxysilan gewinnt.

## Claims

1. Process for preparing an alkylaminoalkylalkoxysilane of the general formula I
R- (NR')-Y-Si (R¹)ₙ (OR²)₃₋ₙ (I)
in which R is a linear, branched or cyclic alkyl group having 1 to 12 carbon atoms, R' is a hydrogen (H) or a linear, branched or cyclic alkyl group having 1 to 12 carbon atoms, Y is a bivalent alkyl group from the group of -CH₂-, - (CH₂)₂-, -(CH₂)₃-, -(CH₂) (CH(CH₃)) (CH₂)- and -(CH₂)₄-, R¹ and R² groups are the same or different and are each a linear or branched alkyl group having 1 to 4 carbon atoms, and n is 0 or 1 or 2,
by
- reacting an alkylamine of the general formula II used in excess
R(NR')H (II)
in which R is a linear, branched or cyclic alkyl group having 1 to 12 carbon atoms and R' is a hydrogen (H) or a linear, branched or cyclic alkyl group having 1 to 12 carbon atoms
with a haloalkylalkoxysilane of the general formula III
X-Y-Si (R¹) ₙ (OR²) ₃₋ₙ (III)
in which X is Cl or Br, Y is a bivalent alkyl group from the group of -CH₂-, -(CH₂)₂-, -(CH₂)₃-, -(CH₂) (CH(CH₃)) (CH₂)- and -(CH₂)₄-, R¹ and R² groups are the same or different and are each a linear or branched alkyl group having 1 to 4 carbon atoms, and n is 0 or 1 or 2,
using the alkylamine and the haloalkylalkoxysilane in a molar ratio of 1.1:1 to 10:1,
- distilling off excess free alkylamine,
- at the same time, treating the remaining product mixture comprising alkylamine hydrohalide and alkylaminoalkylalkoxysilane hydrohalide with addition of an alkylaminoalkylalkoxysilane corresponding to the present compounds, removing the alkylamine released as a result from the system and
- working up the remaining product or product hydrohalide mixture,
the product or product hydrohalide mixture being worked up by heat treatment, reacting with an alkali metal alkoxide solution, precipitating and removing alkali metal halide formed, and removing the solvent of the alkali metal alkoxide solution used from the product by distillation to obtain the product
or
the product or product hydrohalide mixture being worked up by adding a nonpolar organic solvent, treating the mixture with an aqueous alkali metal or alkaline earth metal hydroxide solution, separating the resulting aqueous phase containing metal salt from the organic product phase, and distilling the organic phase to obtain the product.

2. Process according to Claim 1,
**characterized in that**
product of the formula I obtained is recycled partly into the process to release the corresponding alkylamine from the alkylamine hydrohalide.

3. Process according to Claim 1 or 2,
**characterized in that**
alkylamine recovered is recycled as a reactant component.

4. Process according to any one of Claims 1 to 3,
**characterized in that**
the alkylamine of the formula II used is methylamine, ethylamine, n-propylamine, n-butylamine, 2-heptylamine, 2-butylamine, n-pentylamine, 2-pentylamine, 3-pentylamine, n-hexylamine, n-heptylamine, octylamine, 2-octylamine, nonylamine, decylamine, undecylamine or dodecylamine.

5. Process according to any one of Claims 1 to 4,
**characterized in that**
the haloalkylalkoxysilane of the formula III used is 3-chloropropyltrimethoxysilane, 3-chloropropyl-triethoxysilane, 3-chloroisobutyltrimethoxysilane, 3-chloroisobutyltriethoxysilane, 2-chloroethyl-trimethoxysilane, 2-chloroethyltriethoxysilane, 1-chloromethyltrimethoxysilane, 1-chloromethyltri-ethoxysilane, chloropropylmethyldimethoxysilane, chloropropylmethyldiethoxysilane, chloropropyldi-methylmethoxysilane, chloropropyldimethylethoxy-silane, chloroisobutylmethyldimethoxysilane, chloroisobutyldimethylmethoxysilane, chloro-isobutyldimethylethoxysilane, chloroisobutyl-dimethyldiethoxysilane, chloroethylmethyl-dimethoxysilane, chloroethylmethyldiethoxysilane, chloroethyldimethylmethoxysilane, chloroethyl-dimethylethoxysilane, chloromethylmethyldimethoxy-silane, chloromethylmethyldiethoxysilane, chloro-methyldimethylmethoxysilane or chloromethyldi-methylethoxysilane.

6. Process according to any one of Claims 1 to 5,
**characterized in that**
the reaction is performed at a temperature of 60 to 200°C and a pressure of 0.1 to 20 bar, and over a duration of 30 minutes to 16 hours.

7. Process according to any one of Claims 1 to 6,
**characterized in that**
the product obtained is 3-(n-butylamino)propyltrimethoxysilane or 3-(n-butylamino)propyl-triethoxysilane.

## Revendications

1. Procédé pour la préparation d'un alkylamino-alkylalcoxysilane de formule générale I
R- (NR') -Y-Si (R¹)ₙ (OR²)₃₋ₙ (I),
dans laquelle R représente un groupe alkyle linéaire, ramifié ou cyclique ayant de 1 à 12 atomes de carbone, R' représente un atome d'hydrogène (H) ou un groupe alkyle linéaire, ramifié ou cyclique ayant de 1 à 12 atomes de carbone, Y représente un groupe alkyle divalent choisi dans la série -CH₂-, -(CH₂)₂-, -(CH₂)₃-, -(CH₂) (CH(CH₃)) (CH₂)- et -(CH₂)₄-, les groupes R¹ et R² sont identiques ou différents et représentent chacun un groupe alkyle linéaire ou ramifié ayant de 1 à 4 atomes de carbone et n est égal à 0 ou 1 ou 2,
par mise en réaction
- d'une alkylamine utilisée en excès, de formule générale II
R(NR')H (II),
dans laquelle R représente un groupe alkyle linéaire, ramifié ou cyclique ayant de 1 à 12 atomes de carbone et R' représente un atome d'hydrogène (H) ou un groupe alkyle linéaire, ramifié ou cyclique ayant de 1 à 12 atomes de carbone,
avec un halogénoalkylalcoxysilane de formule générale III
X-Y-Si (R¹)ₙ (OR²)₃₋ₙ (III),
dans laquelle X représente Cl ou Br, Y représente un groupe alkyle divalent choisi dans la série -CH₂-, -(CH₂)₂-, - (CH₂) ₃-, -(CH₂)(CH(CH₃))(CH₂)- et -(CH₂)₄-, les groupes R¹ et R² sont identiques ou différents et représentent chacun un groupe alkyle linéaire ou ramifié ayant de 1 à 4 atomes de carbone et n est égal à 0 ou 1 ou 2,
en utilisant l'alkylamine et l'halogénoalkylalcoxysilane en un rapport molaire de 1,1:1 à 10:1,
- élimination par distillation de l'alkylamine libre en excès,
- simultanément traitement du mélange restant de produits, contenant de l'halogénhydrate d'alkylamine et de l'halogénhydrate d'alkylamino-alkylalcoxysilane, avec addition d'un alkylamino-alkylalcoxysilane correspondant aux composés présents, évacuation hors du système de l'alkylamine ainsi libérée et
- traitement final du produit restant ou mélange restant d'halogénhydrates produits,
en soumettant pour le traitement final à un traitement thermique le produit ou mélange d'halogénhydrates produits, en le faisant réagir avec une solution d'un alcoolate de métal alcalin, en faisant précipiter et en séparant l'halogénure de métal alcalin ainsi formé, puis en éliminant du produit par distillation le solvant de la solution d'alcoolate de métal alcalin utilisée et en obtenant le produit
ou
en ajoutant pour le traitement final un solvant organique non polaire au produit ou mélange d'halogénhydrates produits, puis en traitant le mélange par une solution aqueuse d'hydroxyde de métal alcalin ou alcalino-terreux, et en séparant de la phase organique contenant le produit la phase aqueuse contenant un sel métallique, qui en résulte, puis en distillant la phase organique et en obtenant le produit.

2. Procédé selon la revendication 1,
**caractérisé**
**en ce qu'**on renvoie en partie dans le processus le produit selon la formulé I obtenu, pour la libération de l'alkylamine correspondante à partir de l'halogénhydrate d'alkylamine.

3. Procédé selon la revendication 1 ou 2,
**caractérisé**
**en ce qu'**on recycle en tant que composant de départ l'alkylamine récupérée.

4. Procédé selon l'une quelconque des revendications 1 à 3,
**caractérisé**
**en ce qu'**on utilise comme alkylamine selon la formule II la méthylamine, l'éthylamine, la n-propylamine, la n-butylamine, la 2-heptylamine, la 2-butylamine, la n-pentylamine, la 2-pentylamine, la 3-pentylamine, la n-hexylamine, la n-heptylamine, l'octylamine, la 2-octylamine, la nonylamine, la décylamine, l'undécylamine ou la dodécylamine.

5. Procédé selon l'une quelconque des revendications 1 à 4,
**caractérisé**
**en ce qu'**on utilise comme halogénoalkylalcoxysilane selon la formule III le 3-chloropropyltriméthoxysilane, le 3-chloropropyltriéthoxysilane, le 3-chloro-isobutyltriméthoxysilane, le 3-chloro-isobutyl-triéthoxysilane, le 2-chloréthyltriméthoxysilane, le 2-chloréthyltriéthoxysilane, le 1-chlorométhyl-triméthoxysilane, le 1-chlorométhyltriéthoxysilane, le chloropropylméthyldiméthoxysilane, le chloropropyl-méthyldiéthoxysilane, le chloropropyldiméthylméthoxy-silane, le chloropropyldiméthyléthoxysilane, le chloro-isobutylméthyldiméthoxysilane, le chloro-isobutyl-diméthylméthoxysilane, le chloro-isobutyldiméthyl-éthoxysilane, le chloro-isobutyldiméthyldiéthoxysilane, le chloréthylméthyldiméthoxysilane, le chloréthyl-méthyldiéthoxysilane, le chloréthyldiméthylméthoxy-silane, le chloréthyldiméthyléthoxysilane, le chlorométhylméthyldiméthoxysilane, le chlorométhyl-méthyldiéthoxysilane, le chlorométhyldiméthylméthoxy-silane ou le chlorométhyldiméthyléthoxysilane.

6. Procédé selon l'une quelconque des revendications 1 à 5,
**caractérisé**
**en ce qu'**on effectue la réaction à une température de 60 à 200 °C, sous une pression de 0,1 à 20 bars et pendant une durée de 30 minutes à 16 heures.

7. Procédé selon l'une quelconque des revendications 1 à 6,
**caractérisé**
**en ce qu'**on obtient comme produit le 3-(n-butylamino)propyltriméthoxysilane ou le 3-(n-butylamino)propyltriéthoxysilane.
